# EUROPEAN PATENT APPLICATION

(11) **EP 4 580 010 A1**
(43) Date of publication of application: **02.07.2025**
(21) Application number: 24221128.2
(22) Date of filing: 18.12.2024
(51) Int. Cl.: H02K 5/20, H02K 9/19

(54) **MOTOR UNIT**

(30) Priority: 28.12.2023 JP 2023222648
(71) Applicant: TOYOTA JIDOSHA KABUSHIKI KAISHA, Aichi-ken, 471-8571 (JP)
(72) Inventor: WATANABE, Kohei, Aichi-ken, 471-8571 (JP); ASAOKA, Hironori, Aichi-ken, 471-8571 (JP); TAKAHARA, Yoshihiro, Aichi-ken, 471-8571 (JP); SUZUKI, Yasunori, Aichi-ken, 471-8571 (JP); DEGUCHI, Junichi, Aichi-ken, 471-8571 (JP); YOSHIOKA, Kentaro, Aichi-ken, 471-8571 (JP); TAKAMURA, Yasuyuki, Aichi-ken, 471-8571 (JP)
(74) Representative: D Young & Co LLP

(57) **Abstract**

The motor unit (12) includes a stator (44) having a tubular shape centered on a central axis, a housing (30) including a peripheral wall (50A) that holds the stator (44) from a radially outer side, one or more water passages (56) provided in the peripheral wall (50A) of the housing (30), with each of the one or more water passages extending along an axial direction parallel to the central axis and allowing aqueous coolant to flow, and one or more oil passages provided in the peripheral wall (50A) of the housing (30), with each of the one or more oil passages extending along the axial direction and allowing oil-based coolant to flow. The one or more water passages (56) and the one or more oil passages are arranged along a peripheral direction.

## Description

### BACKGROUND OF THE INVENTION

### 1. Field of the Invention

The technology disclosed in the present specification relates to a motor unit.

### 2. Description of Related Art

Japanese Unexamined Patent Application Publication No. 2014-225971 (JP 2014-225971 A) discloses a motor unit. The motor unit includes a stator having a tubular shape centered on a central axis, a housing including a peripheral wall that holds the stator from a radially outer side, one or more water passages provided in the peripheral wall of the housing, with each of the one or more water passages extending along an axial direction parallel to the central axis and allowing aqueous coolant to flow, and one or more oil passages provided in the peripheral wall of the housing, with each of the one or more oil passages extending along the axial direction and allowing oil-based coolant to flow.

### SUMMARY OF THE INVENTION

In the motor unit of JP 2014-225971 A, a motor housed in the housing is cooled by the aqueous coolant flowing through the water passage and the oil-based coolant flowing through the oil passage. In the motor unit, an entirety of the oil passage is disposed radially outward of the water passage. Reducing a size of the motor unit is desired.

The present specification provides a technology capable of downsizing a motor unit.

A first aspect of the present technology relates to a motor unit including a stator, a housing, one or more water passages, and one or more oil passages. The stator has a tubular shape centered on a central axis. The housing includes a peripheral wall configured to hold the stator from a radially outer side. The one or more water passages are provided in the peripheral wall of the housing, with each of the one or more water passages extending along an axial direction parallel to the central axis and allowing aqueous coolant to flow. The one or more oil passages are provided in the peripheral wall of the housing, with each of the one or more oil passages extending along the axial direction and allowing oil-based coolant to flow. The one or more water passages and the one or more oil passages are arranged along a peripheral direction.

With the above configuration, the one or more water passages and the one or more oil passages are arranged in the peripheral direction. Therefore, a range of the one or more oil passages disposed radially outward of the water passages can be reduced as compared with a configuration in which an entirety of the one or more oil passages is arranged radially outward of the water passages. Accordingly, the motor unit can be downsized.

According to a second aspect, in the motor unit according to the first aspect, each of the one or more water passages may have the same cross-sectional shape perpendicular to the axial direction as each of the one or more oil passages.

In a configuration in which the stator is held by the housing, a uniform holding force of the housing in the peripheral direction is desirable. With the above configuration, rigidity of the housing can be made uniform in an area where the one or more water passages are provided and an area where the one or more oil passages are provided. Therefore, the holding force of the housing in the peripheral direction can be made uniform.

According to a third aspect, in the motor unit according to the second aspect, each of the one or more water passages may have the same distance from the central axis as each of the one or more oil passages.

With the above configuration, the holding force of the housing in the peripheral direction can be made more uniform.

According to a fourth aspect, in the motor unit according to the third aspect, the one or more water passages and the one or more oil passages may be arranged at an equal interval in the peripheral direction.

With the above configuration, the holding force of the housing in the peripheral direction can be made even more uniform.

According to a fifth aspect, in the motor unit according to any one of the first to fourth aspects, each of the one or more water passages may be isolated from an internal space of the housing configured to house the stator, and each of the one or more oil passages may communicate with the internal space of the housing.

With the above configuration, the stator in the housing can be cooled directly by the oil-based coolant inside the housing while the stator in the housing is cooled by the aqueous coolant from the radially outer side. In addition, the oil-based coolant supplied to the stator can also function as a lubricant.

According to a sixth aspect, in the motor unit according to the fifth aspect, the one or more oil passages may include a first oil passage located vertically below the central axis. The peripheral wall of the housing may be provided with one or more first opening portions through which the internal space of the housing and the first oil passage communicate with each other.

The oil-based coolant supplied into the housing remains in a lower part of the internal space of the housing. At this time, in a case where the first oil passage having the above configuration is provided, the oil-based coolant that remains in the lower part of the internal space can be recovered and guided to other portions in the housing or to the outside of the housing. Alternatively, the oil-based coolant can be supplied from the outside of the housing to the internal space of the housing by using the first oil passage.

According to a seventh aspect, in the motor unit according to the sixth aspect, the one or more first opening portions may include a first inlet opening portion through which the oil-based coolant in the internal space of the housing is introduced into the first oil passage.

With the above configuration, as described above, the oil-based coolant that remains in the lower part of the internal space can be recovered and guided to other portions in the housing or to the outside of the housing.

According to an eighth aspect, in the motor unit according to the seventh aspect, the one or more first opening portions may further include a first outlet opening portion through which the oil-based coolant in the first oil passage is discharged to the internal space of the housing or to an outside of the housing.

With the above configuration, the oil-based coolant that remains in the lower part of the internal space can be recovered and guided to other portions in the housing or to the outside of the housing, through the first inlet opening portion and the first outlet opening portion.

According to a ninth aspect, in the motor unit according to the eighth aspect, the first inlet opening portion may be located on a first side in the axial direction with respect to a first-side end surface of the stator in the axial direction, and the first outlet opening portion may be located on a second side in the axial direction with respect to a second-side end surface of the stator in the axial direction.

With the above configuration, the oil-based coolant that remains in a lower part of a first-side space can be recovered and guided to a second-side space.

According to a tenth aspect, in the motor unit according to any one of the sixth to ninth aspects, the one or more oil passages may further include a second oil passage located vertically above the central axis. The peripheral wall of the housing may be provided with one or more second opening portions through which the internal space of the housing and the second oil passage communicate with each other.

With the above configuration, the oil-based coolant can be supplied to the stator through the second oil passage to directly cool the stator.

According to an eleventh aspect, in the motor unit according to the tenth aspect, the second oil passage may be configured to supply the oil-based coolant from an outside. The one or more second opening portions may include one or more second outlet opening portions through which the oil-based coolant in the second oil passage is supplied to the stator.

With the above configuration, a relatively low-temperature oil-based coolant supplied from the outside can be supplied to the stator through the second oil passage to directly cool the stator.

According to a twelfth aspect, in the motor unit according to the eleventh aspect, the one or more second outlet opening portions may be directed toward a coil end of the stator.

The coil end of the stator is likely to generate heat. With the above configuration, the oil-based coolant flowing out from the second outlet opening portion is supplied to the coil end. Therefore, the coil end can be directly cooled.

According to a thirteenth aspect, in the motor unit according to any one of the first to twelfth aspects, the housing may include a central housing including the peripheral wall, a first cover connected to a first end part of the central housing in the axial direction, and a second cover connected to a second end part of the central housing in the axial direction.

With the above configuration, the central housing and the stator can be easily assembled as compared with a case where the housing is composed of two members.

### BRIEF DESCRIPTION OF THE DRAWINGS

Features, advantages, and technical and industrial significance of exemplary embodiments of the invention will be described below with reference to the accompanying drawings, in which like signs denote like elements, and wherein:
FIG. 1 is a schematic view of a drive device according to a first embodiment;
FIG. 2 is a sectional view of a central part in a front-rear direction of a central housing according to the first embodiment;
FIG. 3 is a rear view of a front cover according to the first embodiment;
FIG. 4 is a front view of a rear cover according to the first embodiment;
FIG. 5 is a schematic view showing a flow of oil flowing inside a motor housing according to the first embodiment;
FIG. 6 is a schematic view of a drive device according to a second embodiment; and
FIG. 7 is a sectional view of a central part in a front-rear direction of a central housing 250 according to the second embodiment.

### DETAILED DESCRIPTION OF EMBODIMENTS

### First Embodiment

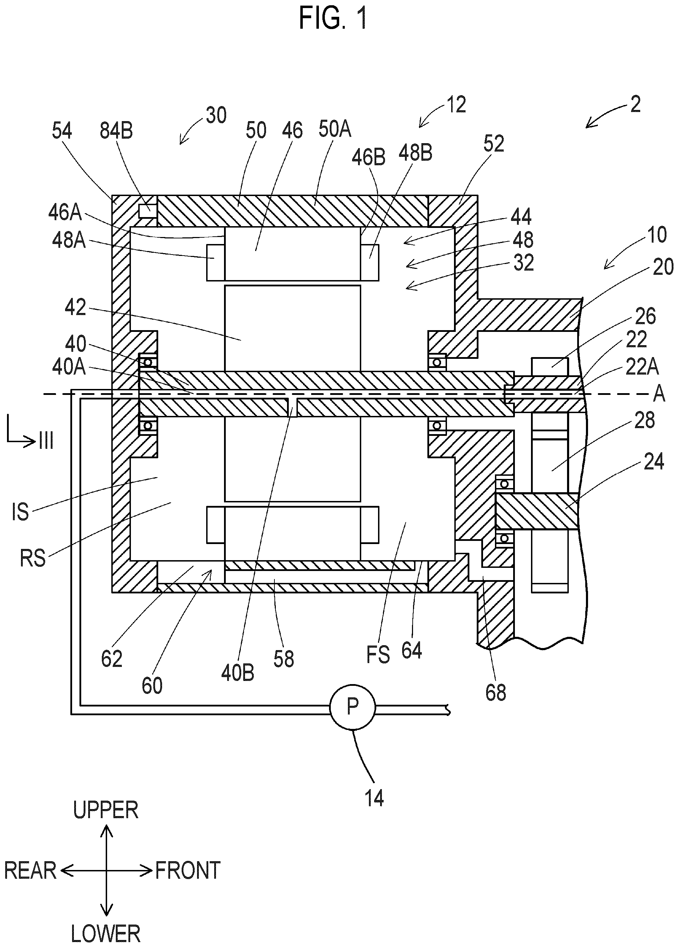

A drive device 2 of a first embodiment will be described with reference to FIGS. 1 to 5. The drive device 2 is mounted in an electrified vehicle or the like. A front-rear direction and a right-left direction in FIGS. 1 to 5 are provided for ease of understanding in the description and do not define actual directions. Hereinafter, a "clockwise direction" and a "counterclockwise direction" will be described based on a direction in which the drive device 2 is viewed from behind.

As shown in FIG. 1, the drive device 2 includes a gear unit 10, a motor unit 12, and an oil pump 14. The oil pump 14 connects the motor unit 12 and an oil pan (not shown) provided at a lower part of the gear unit 10 to each other.

The gear unit 10 is provided in front of the motor unit 12. The gear unit 10 transmits an output from the motor unit 12 to a drive shaft (not shown). The gear unit 10 includes a gear housing 20, a first gear shaft 22, a second gear shaft 24, a first gear 26 fixed to the first gear shaft 22, and a second gear 28 fixed to the second gear shaft 24. In FIG. 1, solely a part of the gear unit 10 is shown. That is, the gear unit 10 further includes gear shafts other than the first gear shaft 22 and the second gear shaft 24, gears other than the first gear 26 and the second gear 28, and the like. The first gear shaft 22 and the second gear shaft 24 extend along the front-rear direction. The first gear shaft 22 is formed with a first shaft oil passage 22A. A rear end part of the first gear shaft 22 is coupled to a front end part of a motor shaft 40 to be described below. The second gear 28 meshes with the first gear 26.

The motor unit 12 includes a motor housing 30 and a motor 32.

The motor 32 is housed in an internal space IS of the motor housing 30. The motor 32 includes the motor shaft 40, a rotor 42, and a stator 44. The motor shaft 40 extends along a direction of an axis A. The direction of the axis A is parallel to the front-rear direction. The motor shaft 40 is rotatably supported in the motor housing 30 by bearings. The motor shaft 40 is formed with a second shaft oil passage 40A that penetrates the motor shaft 40 in the direction of the axis A, and a third shaft oil passage 40B that extends radially outward from a central part of the second shaft oil passage 40A. The rotor 42 is fixed to the motor shaft 40. The stator 44 includes a stator core 46 and a coil 48. The stator core 46 has a cylindrical shape. The stator core 46 is composed of a plurality of electromagnetic steel plates laminated in the direction of the axis A. The rotor 42 is disposed radially inward of the stator core 46. The coil 48 is wound around the stator core 46. The stator core 46 includes a rear surface 46A and a front surface 46B. From the rear surface 46A, a rear coil end 48A of the coil 48 protrudes rearward. From the front surface 46B, a front coil end 48B of the coil 48 protrudes forward. The stator 44 is fixed to the motor housing 30 by press fitting or the like. An outer peripheral wall of the stator core 46 is in contact with an inner peripheral wall of the motor housing 30. The stator 44 separates the internal space IS of the motor housing 30 into a rear space RS located behind the stator 44 and a front space FS located in front of the stator 44.

The motor housing 30 includes a central housing 50, a front cover 52, and a rear cover 54. The central housing 50 has a cylindrical shape. The central housing 50 extends along the direction of the axis A. Both front and rear ends of the central housing 50 are open. The central housing 50 holds the stator 44 from the radially outer side.

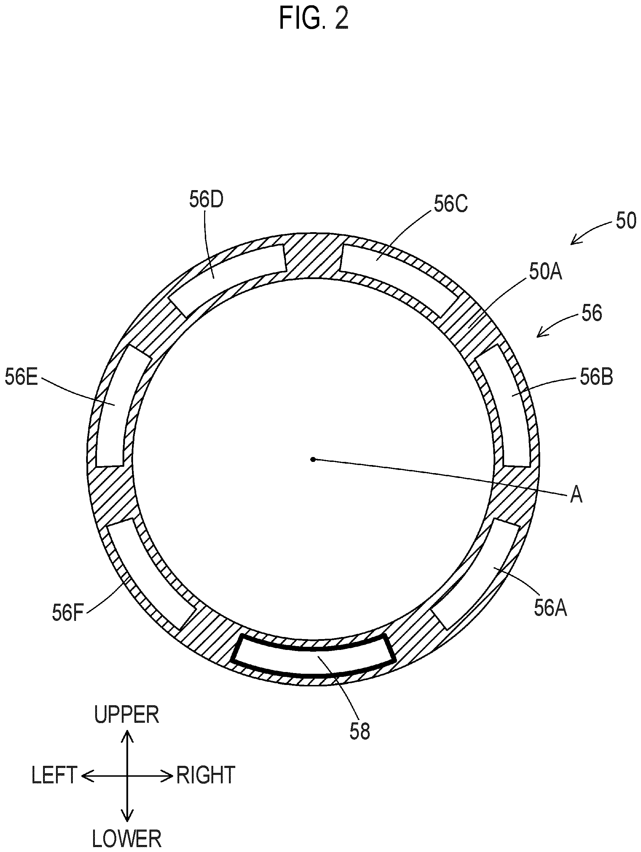

As shown in FIG. 2, the central housing 50 includes a peripheral wall 50A having a cylindrical shape. The central axis coincides with the axis A. The peripheral wall 50A can also be referred to as a peripheral wall of the motor housing 30. The central housing 50 is formed with a plurality of axial water passages 56A to 56F and a first housing oil passage 58. In FIG. 2, the first housing oil passage 58 is indicated by a thick line for ease of understanding. In addition, hereinafter, the axial water passages 56A to 56F may be collectively referred to as an "axial water passage 56". The axial water passage 56 and the first housing oil passage 58 extend along the direction of the axis A. The axial water passage 56 and the first housing oil passage 58 are arranged along a circumferential direction. The axial water passage 56 and the first housing oil passage 58 are arranged at equal intervals in the peripheral direction. The first housing oil passage 58 is located vertically below the axis A. The first housing oil passage 58 is disposed between the axial water passage 56A and the axial water passage 56F in the circumferential direction. The axial water passage 56 and the first housing oil passage 58 have the same cross-sectional shape perpendicular to the direction of the axis A. Specifically, the axial water passage 56A and the first housing oil passage 58 have the same radial length and the same circumferential length. The axial water passage 56 has the same distance from the axis A as the first housing oil passage 58. The axial water passage 56 penetrates the central housing 50 in the front-rear direction. That is, the axial water passage 56 is isolated from the internal space IS of the motor housing 30.

As shown in FIG. 1, the peripheral wall 50A of the central housing 50 is provided with a lower opening 60 through which the internal space IS of the motor housing 30 communicates with the first housing oil passage 58. The lower opening 60 includes a lower inlet opening 62 located behind the stator 44 and a lower outlet opening 64 located in front of the stator 44. The lower inlet opening 62 is provided in the rear space RS of the motor housing 30 and allows the rear space RS of the motor housing 30 and the first housing oil passage 58 to communicate with each other. The lower inlet opening 62 allows oil in the rear space RS of the motor housing 30 to be introduced into the first housing oil passage 58. The lower inlet opening 62 is provided at a position adjacent to the rear surface 46A (an example of a first-side end surface in the direction of the axis A) of the stator core 46 in the direction of the axis A. Specifically, the lower inlet opening 62 is provided in a range from a rear end of the central housing 50 to a rear end surface of the stator core 46. The lower outlet opening 64 is provided in the front space FS of the motor housing 30 and allows the front space FS of the motor housing 30 and the first housing oil passage 58 to communicate with each other. The lower outlet opening 64 allows oil in the first housing oil passage 58 to be discharged to the front space FS of the motor housing 30. The lower outlet opening 64 is provided at a front end part of the central housing 50. That is, the lower outlet opening 64 is provided in front of (an example of a second side) the front surface 46B (an example of a second-side end surface in the direction of the axis A) of the stator core 46 in the direction of the axis A.

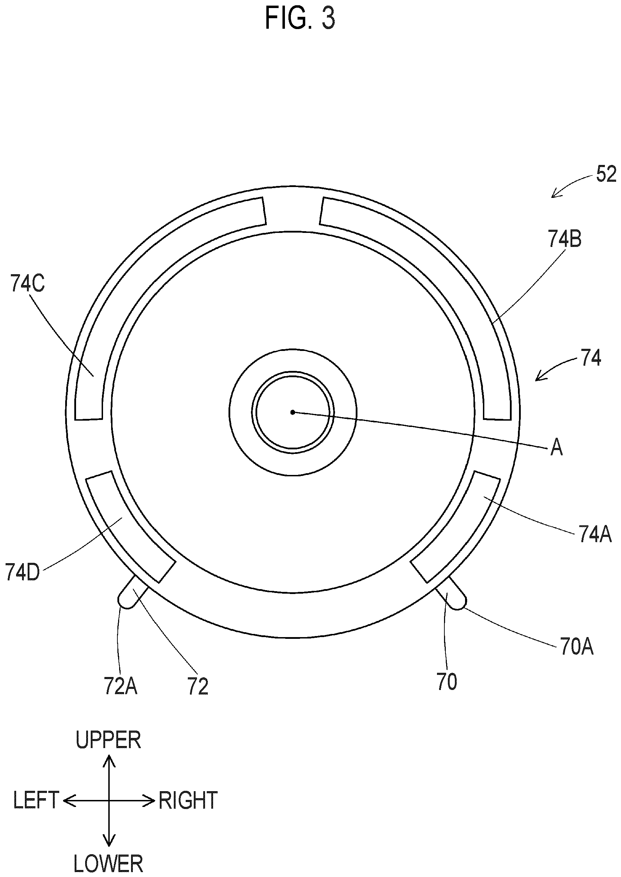

As shown in FIG. 3, the front cover 52 is formed with a supply water passage 70 including a water supply port 70A, a discharge water passage 72 including a water discharge port 72A, and a plurality of front circumferential water passages 74A to 74D. Hereinafter, the front circumferential water passages 74A to 74D may be collectively referred to as a "front circumferential water passage 74". The front circumferential water passage 74 is arranged along the circumferential direction. The front circumferential water passage 74 extends along the circumferential direction. The supply water passage 70 is connected to the front circumferential water passage 74A. The discharge water passage 72 is connected to the front circumferential water passage 74D. The axial water passage 56A (refer to FIG. 2) is connected to the front circumferential water passage 74A. The axial water passage 56B (refer to FIG. 2) is connected to an end part of the front circumferential water passage 74B on a clockwise direction side, and the axial water passage 56C (refer to FIG. 2) is connected to an end part in the counterclockwise direction. The axial water passage 56D (refer to FIG. 2) is connected to an end part of the front circumferential water passage 74C on the clockwise direction side, and the axial water passage 56E (refer to FIG. 2) is connected to an end part in the counterclockwise direction. The axial water passage 56F (refer to FIG. 2) is connected to the front circumferential water passage 74D.

As shown in FIG. 1, the front cover 52 is integrally formed with the gear housing 20. The front cover 52 and the gear housing 20 are formed with a second housing oil passage 68 through which the front space FS of the motor housing 30 and an inner space of the gear housing 20 communicate with each other.

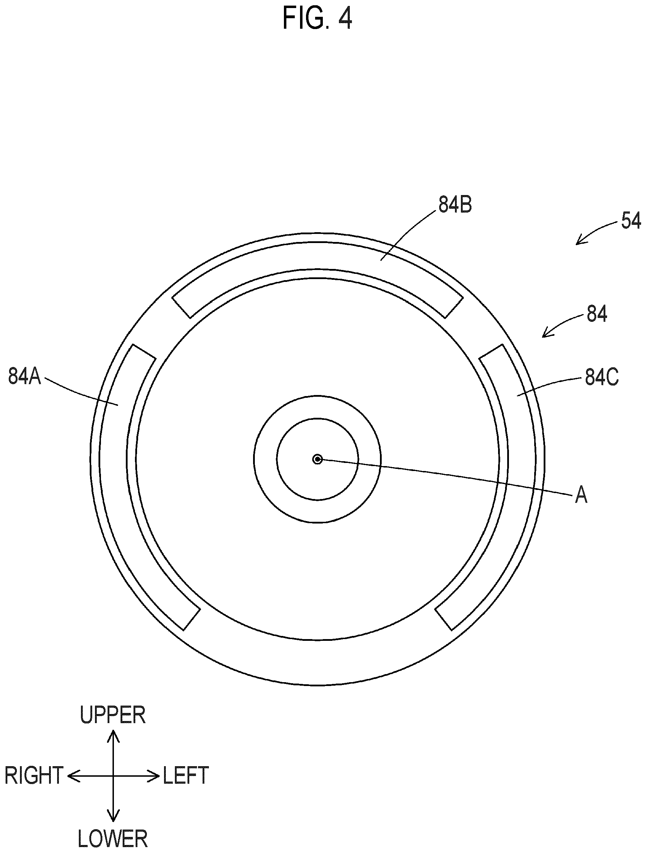

As shown in FIG. 4, the rear cover 54 is formed with a plurality of rear circumferential water passages 84A to 84C. Hereinafter, the rear circumferential water passages 84A to 84C may be collectively referred to as a "rear circumferential water passage 84". The rear circumferential water passage 84 is arranged along the circumferential direction. The rear circumferential water passage 84 extends along the circumferential direction. The axial water passage 56A (refer to FIG. 2) is connected to an end part of the rear circumferential water passage 84A on the clockwise direction side, and the axial water passage 56B (refer to FIG. 2) is connected to an end part in the counterclockwise direction. The axial water passage 56C (refer to FIG. 2) is connected to an end part of the rear circumferential water passage 84B on the clockwise direction side, and the axial water passage 56D (refer to FIG. 2) is connected to an end part in the counterclockwise direction. The axial water passage 56E (refer to FIG. 2) is connected to an end part of the rear circumferential water passage 84C on the clockwise direction side, and the axial water passage 56F (refer to FIG. 2) is connected to an end part in the counterclockwise direction.

A high-voltage current flows through the coil 48 of the stator 44 in FIG. 1. Therefore, the stator 44 generates heat. In the present embodiment, the stator 44 is cooled by using cooling water and oil. A configuration in which the stator 44 is cooled by using the cooling water and the oil will be described.

First, a configuration in which the stator 44 is cooled by using the refrigerant will be described. In the present embodiment, a single water system is formed by the front circumferential water passage 74 (refer to FIG. 3) of the front cover 52, the axial water passage 56 (refer to FIG. 2) of the central housing 50, and the rear circumferential water passage 84 (refer to FIG. 4) of the rear cover 54 connecting the supply water passage 70 and the discharge water passage 72 of the front cover 52 to each other. The axial water passage 56 of the central housing 50 is provided radially outward of the stator 44. Therefore, the stator 44 is cooled by the cooling water flowing inside the axial water passage 56.

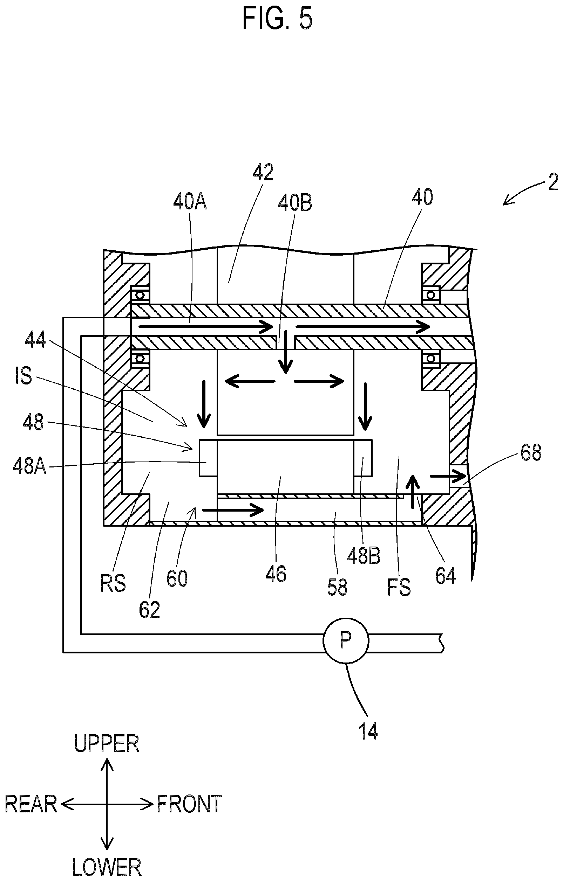

Next, a configuration in which the stator 44 is cooled by using the oil will be described with reference to FIG. 5. Arrows in FIG. 5 indicate an oil flow direction. In addition, in FIG. 5, in order to improve clarity of the oil flow direction, reference numerals of some members are omitted, and flow passage diameters of the second shaft oil passage 40A, the third shaft oil passage 40B, the first housing oil passage 58, and the second housing oil passage 68 are shown larger than in FIG. 1. Further, hereinafter, for ease of understanding, the flow of the oil in a state in which the motor shaft 40 is stopped will be described as an example.

As described above, the oil stored in the oil pan of the gear unit 10 is supplied to the second shaft oil passage 40A of the motor shaft 40 by the oil pump 14. The oil that has flowed into the second shaft oil passage 40A flows forward through the second shaft oil passage 40A. When the oil that has flowed into the second shaft oil passage 40A reaches the central part of the second shaft oil passage 40A, a part of the oil flows to a third shaft oil passage 40B side, and the remaining oil flows further to the front side. The oil flowing further to the front side flows into the first shaft oil passage 22A (refer to FIG. 1) of the first gear shaft 22. Meanwhile, the oil flowing to the third shaft oil passage 40B side passes through the third shaft oil passage 40B. A part of the oil that has reached the rotor 42 flows rearward, and the remaining oil flows forward. The oil that has flowed out to the outside of the rotor 42 flows downward. During the downward flow of the oil, the oil comes into contact with the rear coil end 48A and the front coil end 48B of the stator 44. As a result, the rear coil end 48A and the front coil end 48B of the stator 44 are cooled.

The oil that has flowed out to the outside of the rotor 42 remains in lower parts of the rear space RS and the front space FS of the motor housing 30. Since the rear space RS and the front space FS communicate with each other through the first housing oil passage 58, the oil that remains in the lower part of the rear space RS flows into the front space FS through the first housing oil passage 58. The oil that has remained in the lower part of the front space FS passes through the second housing oil passage 68 and flows into the gear housing 20.

As described above, as shown in FIG. 1, the motor unit 12 includes the stator 44 having a cylindrical shape centered on the axis A, the motor housing 30 (an example of a "housing") including the peripheral wall 50A that holds the stator 44 from the radially outer side, the axial water passage 56 (an example of "one or more water passages") provided in the peripheral wall 50A of the motor housing 30, with each axial water passage extending along the direction of the axis A parallel to the central axis and allowing the cooling water (an example of "aqueous coolant") to flow, and the first housing oil passage 58 (an example of "one or more oil passages") provided in the peripheral wall 50A of the motor housing 30, with each first housing oil passage extending along the direction of the axis A and allowing the oil (an example of "oil-based coolant") to flow. As shown in FIG. 2, the axial water passage 56 and the first housing oil passage 58 are arranged along the peripheral direction.

With the above configuration, the axial water passage 56 and the first housing oil passage 58 are arranged in the peripheral direction. Therefore, as compared with a configuration in which the entirety of the first housing oil passage 58 is arranged radially outward of the axial water passage 56, the range of the first housing oil passage 58 disposed radially outward of the axial water passage 56 can be reduced. Accordingly, the motor unit 12 can be downsized.

In addition, as shown in FIG. 2, each axial water passage 56 has the same cross-sectional shape perpendicular to the direction of the axis A as the first housing oil passage 58.

In a configuration in which the stator 44 is held by the motor housing 30, a uniform holding force of the motor housing 30 in the peripheral direction is desirable. With the above configuration, rigidity of the motor housing 30 can be made uniform in an area where the axial water passage 56 is provided and an area where the first housing oil passage 58 is provided. Therefore, the holding force of the motor housing 30 in the peripheral direction can be made uniform.

Additionally, as shown in FIG. 2, each axial water passage 56 has the same distance from the central axis as the first housing oil passage 58.

With the above configuration, the holding force of the motor housing 30 in the peripheral direction can be made more uniform.

Further, as shown in FIG. 2, the axial water passage 56 and the first housing oil passage 58 are arranged at equal intervals in the peripheral direction.

With the above configuration, the holding force of the motor housing 30 in the peripheral direction can be made even more uniform.

Moreover, as shown in FIG. 1, each axial water passage 56 is isolated from the internal space IS of the motor housing 30 that houses the stator 44, and the first housing oil passage 58 communicates with the internal space IS of the motor housing 30.

With the above configuration, the stator 44 in the motor housing 30 can be cooled directly by the oil inside the motor housing 30 while the stator 44 in the motor housing 30 is cooled from the radially outer side by the cooling water. In addition, the oil supplied to the stator 44 can also function as a lubricant.

Further, as shown in FIG. 1, the first housing oil passage 58 (an example of a "first oil passage") is located vertically below the central axis. The peripheral wall 50A of the motor housing 30 is provided with the lower opening 60 (an example of "one or more first opening portions") through which the internal space IS of the motor housing 30 and the first housing oil passage 58 communicate with each other.

The oil supplied into the motor housing 30 remains in the lower part of the internal space IS of the motor housing 30. At this time, in a case where the first housing oil passage 58 is provided, the oil that remains in the lower part of the internal space IS can be recovered and guided to other portions in the motor housing 30.

In addition, as shown in FIG. 1, the lower opening 60 includes the lower inlet opening 62 (an example of a "first inlet opening portion") through which the oil in the internal space IS of the motor housing 30 is introduced into the first housing oil passage 58.

With the above configuration, the oil that remains in the lower part of the internal space IS can be recovered and guided to other portions in the motor housing 30.

Additionally, as shown in FIG. 1, the lower opening 60 further includes the lower outlet opening 64 (an example of a "first outlet opening portion") through which the oil in the first housing oil passage 58 is discharged to the front space FS of the motor housing 30.

With the above configuration, the oil that remains in the lower part of the rear space RS can be recovered and guided to the front space FS in the motor housing 30, through the lower inlet opening 62 and the lower outlet opening 64.

Additionally, the lower inlet opening 62 is located behind (an example of "a first side in the axial direction") the rear end surface of the stator 44 (specifically, the rear surface 46A of the stator core 46) (an example of "a first-side end surface in the axial direction"), and the lower outlet opening 64 is located in front of (an example of "a second side in the axial direction") a front end surface of the stator 44 (specifically, the front surface 46B of the stator core 46) (an example of "a second-side end surface in the axial direction").

With the above configuration, the oil that remains in the lower part of the rear space RS can be recovered and guided to the front space FS.

Further, the motor housing 30 includes the central housing 50 including the peripheral wall 50A, the front cover 52 (an example of a "first cover") connected to a front end part (an example of a "first end part") of the central housing 50, and the rear cover 54 (an example of a "second cover") connected to the rear end part (an example of "a second end part") of the central housing 50.

With the above configuration, the central housing 50 and the stator 44 can be easily assembled as compared with a case where the motor housing 30 is composed of two members.

### Second Embodiment

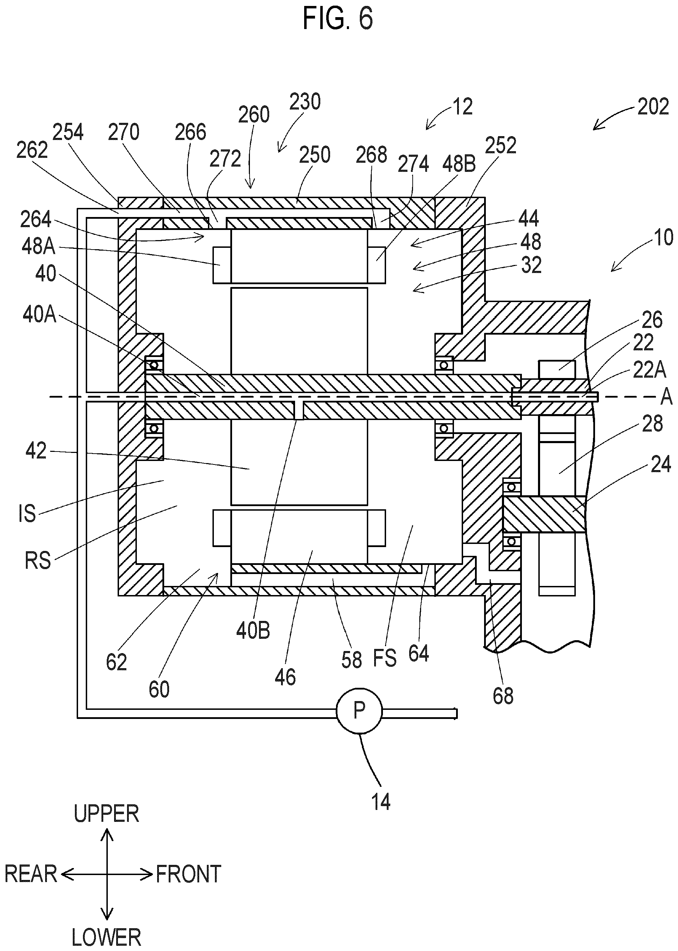

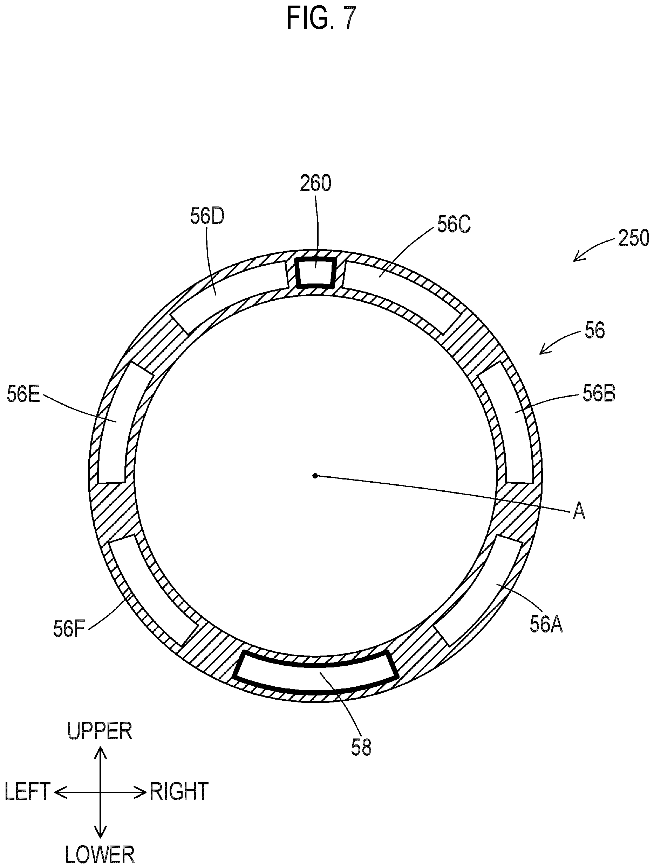

A drive device 202 of a second embodiment will be described with reference to FIGS. 6 and 7. Configurations common between the embodiments will be denoted by the same reference numerals, and the description thereof will be omitted.

As shown in FIG. 7, a central housing 250 of the motor housing 30 is formed with the axial water passages 56A to 56F, the first housing oil passage 58, and a third housing oil passage 260. The third housing oil passage 260 is located vertically above the axis A. The third housing oil passage 260 is disposed between the axial water passage 56C and the axial water passage 56D in the circumferential direction. As shown in FIG. 6, an oil inlet opening 262 is provided at a rear-end upper part of a rear cover 254. A peripheral wall 250A of the central housing 250 is provided with an upper opening 264 through which the internal space IS of the motor housing 30 and the third housing oil passage 260 communicate with each other. The upper opening 264 includes a rear oil outlet opening 266 and a front oil outlet opening 268. The rear oil outlet opening 266 is provided above the rear coil end 48A of the stator 44. The front oil outlet opening 268 is provided above the front coil end 48B of the stator 44. The rear oil outlet opening 266 and the front oil outlet opening 268 are directed to the rear coil end 48A and the front coil end 48B, respectively. The third housing oil passage 260 includes an axial oil passage 270, a rear radial oil passage 272, and a front radial oil passage 274. The axial oil passage 270 extends from the oil inlet opening 262 to just before a front end of the central housing 250. The rear radial oil passage 272 allows the axial oil passage 270 and the rear oil outlet opening 266 to communicate with each other. The front radial oil passage 274 allows the axial oil passage 270 and the front oil outlet opening 268 to communicate with each other.

Although not shown, the front cover 252 and a rear cover 254 of the present embodiment are formed with circumferential water passages that constitute a first water system including the axial water passages 56A to 56C, and circumferential water passages that constitute a second water system including the axial water passages 56D to 56F.

As described above, as shown in FIG. 7, the motor unit 12 further includes the third housing oil passage 260 (an example of a "second oil passage") located vertically above the axis A. The peripheral wall 250A of the motor housing 30 is provided with the upper opening 264 (an example of "one or more second opening portions") through which the internal space IS of the motor housing 30 and the third housing oil passage 260 communicate with each other.

With the above configuration, the oil can be supplied to the stator 44 through the upper opening 264 to directly cool the stator 44.

In addition, as shown in FIG. 6, the third housing oil passage 260 is configured to supply the oil from the outside. The upper opening 264 includes the rear oil outlet opening 266 and the front oil outlet opening 268 (examples of "one or more second outlet opening portions") through which the oil in the third housing oil passage 260 is supplied to the stator 44.

With the above configuration, a relatively low-temperature oil supplied from the outside can be supplied to the stator 44 through the third housing oil passage 260 to directly cool the stator 44.

Further, as shown in FIG. 6, the rear oil outlet opening 266 and the front oil outlet opening 268 are directed toward the rear coil end 48A and the front coil end 48B of the stator 44, respectively.

The rear coil end 48A and the front coil end 48B of the stator 44 are likely to generate heat. With the above configuration, the oil flowing out from the rear oil outlet opening 266 and the front oil outlet opening 268 is supplied to the rear coil end 48A and the front coil end 48B. Therefore, the rear coil end 48A and the front coil end 48B can be directly cooled.

Although specific examples of the technology disclosed in the present specification have been described in detail above, these examples are merely illustrative and do not limit the scope of the claims. The technology described in the claims includes various modifications and changes of the specific examples exemplified above.

### First Modification Example

In the first embodiment, the cross-sectional shape of the axial water passage 56 and the cross-sectional shape of the first housing oil passage 58 may be different from each other. In addition, the axial water passage 56 may have a distance from the axis A different from the first housing oil passage 58. Further, the axial water passage 56 and the first housing oil passage 58 need not be arranged at equal intervals in the circumferential direction.

### Second Modification Example

In the first and second embodiments, the first housing oil passage 58 may be isolated from the internal space IS of the motor housing 30. That is, the lower opening 60 need not be provided in the central housings 50, 250. In this case, the front covers 52, 252 need only be provided with an oil passage through which a rear end of the first housing oil passage 58 and the outside (specifically, the inner space of the gear housing 20) communicate with each other, and the rear covers 54, 254 need only be provided with an oil passage through which the rear end of the first housing oil passage 58 and the rear space RS communicate with each other.

### Third Modification Example

In the first and second embodiments, the central housings 50, 250 need not include one of the lower inlet opening 62 and the lower outlet opening 64. In a case where the central housings 50, 250 do not include the lower inlet opening 62, an oil passage through which the rear end of the first housing oil passage 58 and the rear space RS communicate with each other need only be provided in the rear covers 54, 254. Alternatively, in a case where the central housings 50, 250 do not include the lower outlet opening 64, an oil passage through which a front end of the first housing oil passage 58 and the outside communicate with each other need only be provided in the front covers 52, 252.

### Fourth Modification Example

In the first and second embodiments, a position where the first housing oil passage 58 is provided is not limited to being vertically below the axis A. The first housing oil passage 58 need only be located below the axis A.

### Fifth Modification Example

In the second embodiment, the motor unit 12 may include the third housing oil passage 260 without including the first housing oil passage 58. In the present modification example, the third housing oil passage 260 is an example of the "first oil passage".

### Sixth Modification Example

In the second embodiment, a position where the third housing oil passage 260 is provided is not limited to being vertically above the axis A. The third housing oil passage 260 may be located above lower ends of the rear coil end 48A and the front coil end 48B. In another modification example, the third housing oil passage 260 may be located below the lower ends of the rear coil end 48A and the front coil end 48B.

### Seventh Modification Example

In the first embodiment, the motor unit 12 may further include one or more oil passages having the same configuration as the configuration of the first housing oil passage 58.

### Eighth Modification Example

In the second embodiment, the central housing 250 may include solely one of the rear oil outlet opening 266 and the front oil outlet opening 268.

### Ninth Modification Example

In the second embodiment, the rear oil outlet opening 266 and the front oil outlet opening 268 need not be directed to the rear coil end 48A and the front coil end 48B, respectively. For example, the rear oil outlet opening 266 and the front oil outlet opening 268 may be directed to the stator core 46.

### Tenth Modification Example

The motor housing 30 may be composed of two members.

### Eleventh Modification Example

The motor housing 30 may include water passages that flow in the clockwise direction and the counterclockwise direction by branching from a single inflow passage.

In addition, the technical elements described in the present specification or the drawings exhibit technical usefulness alone or in various combinations and are not limited to the combinations described in the claims at the time of filing. Further, the technology exemplified in the present specification or the drawings can achieve a plurality of objectives at the same time, and achieving one of the objectives has technical usefulness.

## Claims

1. A motor unit (12) comprising:
a stator (44) having a tubular shape centered on a central axis;
a housing (30) including a peripheral wall (50A) configured to hold the stator (44) from a radially outer side;
one or more water passages (56) provided in the peripheral wall (50A) of the housing (30), with each of the one or more water passages extending along an axial direction parallel to the central axis and allowing aqueous coolant to flow; and
one or more oil passages provided in the peripheral wall (50A) of the housing (30), with each of the one or more oil passages extending along the axial direction and allowing oil-based coolant to flow, wherein
the one or more water passages (56) and the one or more oil passages are arranged along a peripheral direction.

2. The motor unit (12) according to claim 1, wherein each of the one or more water passages (56) has the same cross-sectional shape, perpendicular to the axial direction, as each of the one or more oil passages.

3. The motor unit (12) according to claim 2, wherein each of the one or more water passages (56) has the same distance from the central axis as each of the one or more oil passages.

4. The motor unit (12) according to claim 3, wherein the one or more water passages (56) and the one or more oil passages are arranged at an equal interval in the peripheral direction.

5. The motor unit (12) according to claim 1, wherein:
each of the one or more water passages (56) is isolated from an internal space of the housing (30) configured to house the stator (44); and
each of the one or more oil passages communicates with the internal space of the housing (30).

6. The motor unit (12) according to claim 5, wherein:
the one or more oil passages include a first oil passage (58) located vertically below the central axis; and
the peripheral wall (50A) of the housing (30) is provided with one or more first opening portions (60) through which the internal space of the housing (30) and the first oil passage (58) communicate with each other.

7. The motor unit (12) according to claim 6, wherein the one or more first opening portions (60) include a first inlet opening portion (62) through which the oil-based coolant in the internal space of the housing (30) is introduced into the first oil passage (58).

8. The motor unit (12) according to claim 7, wherein the one or more first opening portions (60) further include a first outlet opening portion (64) through which the oil-based coolant in the first oil passage (58) is discharged to the internal space of the housing (30) or to an outside of the housing (30).

9. The motor unit (12) according to claim 8, wherein:
the first inlet opening portion (62) is located on a first side in the axial direction with respect to a first-side end surface of the stator (44) in the axial direction; and
the first outlet opening portion (64) is located on a second side in the axial direction with respect to a second-side end surface of the stator (44) in the axial direction.

10. The motor unit (12) according to claim 6, wherein:
the one or more oil passages further include a second oil passage (260) located vertically above the central axis; and
the peripheral wall of the housing (30) is provided with one or more second opening portions (264) through which the internal space of the housing (30) and the second oil passage (260) communicate with each other.

11. The motor unit (12) according to claim 10, wherein:
the second oil passage (260) is configured to supply the oil-based coolant from an outside; and
the one or more second opening portions (264) include one or more second outlet opening portions (268) through which the oil-based coolant in the second oil passage (260) is supplied to the stator (44).

12. The motor unit (12) according to claim 11, wherein the one or more second outlet opening portions (268) are directed toward a coil end of the stator (44).

13. The motor unit (12) according to claim 1, wherein the housing (30) includes a central housing (50) including the peripheral wall (50A), a first cover (52) connected to a first end part of the central housing (50) in the axial direction, and a second cover (54) connected to a second end part of the central housing (50) in the axial direction.
